# EUROPÄISCHE PATENTSCHRIFT

(11) **EP 3 786 436 B1**
(45) Veröffentlichungstag und Bekanntmachung des Hinweises auf die Patenterteilung: **20.12.2023**
(21) Anmeldenummer: 20192048.5
(22) Anmeldetag: 21.08.2020
(51) Int. Cl.: F02D 41/14, G01L 23/24, G01M 15/11

(54) **VERFAHREN ZUR DIAGNOSTIK VON VERBRENNUNGSAUSSETZERN EINER VERBRENNUNGSKRAFTMASCHINE**
METHOD FOR DIAGNOSING COMBUSTION MISFIRES OF A COMBUSTION ENGINE
PROCÉDÉ DE DIAGNOSTIC DES RATÉS DE COMBUSTION D'UN MOTEUR À COMBUSTION INTERNE

(30) Priorität: 30.08.2019 DE 102019213092
(43) Veröffentlichungstag der Anmeldung: 03.03.2021
(73) Patentinhaber: VOLKSWAGEN AG, 38440 Wolfsburg (DE)
(72) Erfinder: Zimbalist, Nikolaus, 31234 Edemissen (DE); Wetten, Robert, 10717 Berlin (DE); Millich, Elmar, 10999 Berlin (DE); Vogelsang, Jan, 38106 Braunschweig (DE); Shurkewitsch, Andre, 38547 Calberlah (DE); Sternberg, Heiko, 38440 Wolfsburg (DE)

(56) Entgegenhaltungen:
- DE-A1- 19 950 484
- DE-A1-102015 221 447

## Beschreibung

Die vorliegende Erfindung betrifft ein Verfahren zur Diagnostik von Verbrennungsaussetzern einer Verbrennungskraftmaschine mit den Merkmalen des Oberbegriffs des Patentanspruchs 1 und ein Steuergerät mit den Merkmalen des Oberbegriffs des Anspruchs 8.

Die heutigen Abgasgesetzgebungen erfordern eine immer genauere Kraftstoffvorsteuerung. Dafür wurden bereits präzise Berechnungsmethoden im Motorsteuergerät eingeführt und stets verbessert. Voraussetzung für eine exakte Berechnung der erforderlichen Kraftstoffmenge ist jedoch die genaue Kenntnis von Nockenwellenpositionen, Druck- und Temperaturwerten und weitere Eingangsgrößen. Trotz aller Bemühungen bleiben jedoch Bauteile wie der Zylinderkopf, die Nockenwellen oder die Druck- und Temperatursensoren toleranzbehaftet. Des Weiteren ergeben sich durch Druckwellen im Saugrohr sowie im Abgaskrümmer und auch durch unterschiedlich lange Einlass- und Auslasskanäle (Temperatureinflüsse) zylinderindividuelle Unterschiede in der gefangenen Frischluftmasse. Im Fahrzeugbetrieb können diese zylinderindividuellen Unterschiede zurzeit nicht über die herkömmlichen Mess- und Berechnungsverfahren erfasst werden. Diese führen im Betrieb zu zylinderindividuellen Kraftstoff-/Luftverhältnissen, welche nicht dem gewünschtem Luft-/Kraftstoffgemisch entsprechen (nur im Mittelwert). Insbesondere beim Ottomotor ist darauf zu achten, dass das Kraftstoff-/Luftverhältnis dem stöchiometrischem Verhältnis entspricht, nicht nur weil der Katalysator hier die höchste Konvertierungsrate aufweist, sondern weil es bei erhöhten Abweichungen zu Verbrennungsaussetzern kommt. Das unverbrannte Luft-/Kraftstoffgemisch gelangt anschließend in den Katalysator und bei ausreichender Exothermie reagiert das Luft-/Kraftstoffgemisch nach und führt so zu sehr hohen Temperaturen im Katalysator und zu einer möglicher Zerstörung des Monolithen.

Um diesem Nachteil zu begegnen ist es bekannt Verbrennungsaussetzer mit entsprechenden Diagnoseverfahren zu erkennen. Eine verbreitete Diagnosemethode basiert auf der hochfrequenten Auswertung des Drehzahlsignals, anhand dessen über Mustererkennung, nämlich über die Detektion systematischer Signaloszillationen, die Verbrennungsaussetzer diagnostiziert werden.

Die bekannten Verfahren über das Auswerten des Drehzahlsignals erfordern einen hohen Applikationsaufwand und ermöglichen trotzdem keine 100%ige Erkennung, da das Drehzahlsignal stark störbehaftet ist. Dies basiert auf verschiedenen Einflüssen wie beispielsweise durch Vibrationen aufgrund von schlechtem Fahruntergrund, Resonanten im Antriebstrang, unruhige Verbrennung, Vorentflammung, Glühzündung, usw. Um nicht fälschlicherweise Verbrennungsaussetzer zu diagnostizieren, wo keine stattgefunden haben, wird über Applikationsparameter der Betriebsraum der Diagnosefunktion eingeschränkt und erlaubt somit das Auftreten von Aussetzern in diesen ausgenommenen Bereichen.

In der Vergangenheit waren die erforderlichen Abgasgrenzwerte höher als heutzutage. Somit konnten gewisse Fehler toleriert werden. Des Weiteren wurden Gemisch-beeinflussende Steuerungsfunktionen wie z.B. Füllungs- und Kraftstoffpfadmodelle weiter optimiert, wodurch das Auftreten von Verbrennungsaussetzern reduziert wurde.

Es sind verschiedene andere Verfahren bereits bekannt, die eine Erkennung bzw. Ermittlung von Verbrennungsaussetzern einer Verbrennungskraftmaschine nicht über das Auswerten des Drehzahlsignals sondern auf der Basis des gemessenen Abgasgegendrucks vornehmen.

So beschreibt beispielsweise die deutsche Patentschrift DE 10 2009 035 700 B3 ein Verfahren zur zylinderselektiven Erkennung einer ausbleibenden oder unvollkommen erfolgten Entzündung des Gemisches in mindestens einem Zylinder einer Brennkraftmaschine mit mindestens einem Zylinder, wobei die Abgase aus den Zylindern über eine Abgassammelleitung geführt werden, wobei ein Referenzsignal gebildet wird, das sich auf die Stellung eines Kolbens eines Zylinders zu einer bestimmten Zeit T0 bezieht, wobei der Druck in der Abgassammelleitung gemessen wird und das Drucksignal in der Abgassammelleitung über der Zeit in Abhängigkeit vom Referenzsignal in Bezug auf die Unterschreitung eines Schwellwertes ausgewertet wird. Der Schwellwert wird aus dem Mittelwert des Drucksignals erzeugt.

Die deutsche Patentanmeldung DE 10 2017 009 265 A1 offenbart ein Verfahren zum Ermitteln von Verbrennungsaussetzern einer eine Mehrzahl von Zylindern und wenigstens einen den Zylindern gemeinsamen Abgaskrümmer, in welchen während eines befeuerten Betriebs Abgas aus den Zylindern strömt, aufweisenden Verbrennungskraftmaschine, mit den Schritten: Erfassen eines in dem Abgaskrümmer herrschenden Drucks mittels eines Drucksensors; und Ermitteln der Verbrennungsaussetzer in Abhängigkeit von wenigstens einem den erfassten Druck charakterisierenden Signal; bei dem insbesondere die folgenden Schritte ausgeführt werden: Integrieren des Signals über einen vorgebbaren Bereich, in welchem eine Anzahl von Messpunkten liegt, wodurch ein Integral gebildet wird; Dividieren des Integrals durch die Anzahl der Messpunkte; und Ermitteln des Verbrennungsaussetzers in Abhängigkeit von der Division.

In einem anderen Modell-basierten Verfahren wird gemäß der DE 10 2016 002 082 A1 ein Verfahren zum Ermitteln von Verbrennungsaussetzern einer eine Mehrzahl von Zylindern aufweisenden Verbrennungskraftmaschine beschrieben. Bei dem Verfahren wird für jedes Zylindersegment innerhalb eines Arbeitsspiels der Verbrennungskraftmaschine eine Mehrzahl von unterschiedlichen Signalen erfasst, welche jeweils eine Verbrennung des jeweiligen Zylindersegments charakterisieren. Die jeweiligen Signale werden in Abhängigkeit von der Drehzahl und der Last der Verbrennungskraftmaschine gewichtet, wodurch jeweilige Eingangsgrößen gebildet werden. Die Eingangsgrößen werden summiert, wodurch ein Summenwert gebildet wird. Ferner wird wenigstens ein innerhalb des Arbeitsspiels auftretender Verbrennungsaussetzer für jeden Zylinder der Verbrennungskraftmaschine in Abhängigkeit von dem Summenwert ermittelt.

Die bekannten Maßnahmen berücksichtigen jedoch entweder nur den absoluten Abgasgegendruckwert und vergleichen diesen mit einem Schwellenwert. Dies hat den Nachteil, dass der Abgasgegendruck durch viele Einflussgrößen wie Umgebungsdruck, Last, Drehzahl, Stellung des Turbolader-Regelorgans verändert wird. Deshalb ist es sehr aufwendig, die Veränderung des Abgasgegendrucks durch diese Einflussgrößen von der Veränderung durch einen Verbrennungsaussetzer abzugrenzen. Die Methode ist daher entweder fehlerbehaftet oder erfordert einen hohen Bedatungsaufwand.

Andererseits sind Methoden bekannt, die zunächst eine rechnerische Aufbereitung des Abgasgegendrucksignals umfassen. Es werden nur die Mittelwerte oder Integralwerte betrachtet oder es werden andere Parameter mitbetrachtet, um einen weniger fehlerbehafteten Vergleich auszuführen. Dies führt jedoch zu einer geringeren Trennschärfe in Bezug auf die Einzelvorfälle der Verbrennungsaussetzer. Besonders bei niedrigen Abgasdruckniveaus ist eine Aussetzererkennung fast nicht möglich, da die Unterschiede zwischen einem brennenden Zylinder und einem nicht brennenden Zylinder in diesem Bereich sehr klein sind.

Aus der DE 199 50 484 A1 ist ein System und ein Verfahren zur Detektion von Fehlzündungen bekannt. Ein einziger Drucksensor ist dazu in einem Abgaskrümmer einer Verbrennungskraftmaschine angeordnet. Im Betrieb tastet der Drucksensor den Spitzendruck in dem Abgaskrümmer für jeden Zylinder während eines Verbrennungszyklus ab. Zur Gewährleistung der Exaktheit und der Vollständigkeit der Spitzendruckablesungen kann der Drucksensor mehrfache Abtastungen für jede Zylinderzündung vornehmen. Eine alternative Methode zum Bestimmen des Spitzendrucks in einem Spitzendruckerfassungsmodul ist die Schaffung eines digitalen Bildes einer gesamten Krümmerdruckwellenform für jede Zylinderzündung und dann die Bestimmung des Spitzendrucksignals aufgrund der höchsten Druckablesungsabtastung in der gesamten Krümmerdruckwellenform. Die Zylindernummer für den Verbrennungszyklus wird durch einen Nockenwinkeldetektor bestimmt, der einen bestimmten Nockenwinkel für jede Drehung der Nockenwelle oder Kurbelwelle in dem Motor erfasst. Ein Fehlzündungsvorgang wird festgestellt, wenn die Differenz zwischen einem beobachteten Spitzendruck und einem gleitenden Durchschnitt von Spitzendrücken größer als jene ist, die während einer "normalen Verbrennung" vorgefunden wird. Ein Prozessor vergleicht dabei den durchschnittlichen Spitzenabgasdruck, der während eines Verbrennungszyklus erzeugt wird, mit dem aktuellen Spitzenabgasdruck eines Zylinders, um etwaige Druckänderungen aufzuzeichnen. Dazu wird der beobachtete Spitzendruck mit einem Druckschwellenwert, nämlich einem Fehlzündungsdruckschwellenwert oder einem Niederleistungsschwellenwert verglichen. Der Niederleistungsschwellenwert liegt näher an dem gleitenden Durchschnitt von Spitzendrücken als der Fehlzündungsdruckschwellenwert. Der Druckschwellenwert wird bestimmt, während der Motor in einer Testzelle läuft. Bei der Bestimmung und der Berechnung des Druckschwellenwertes sind insbesondere die Kraftstoffverbrauchsrate sowie die Motordrehzahl von Bedeutung.

Die DE 10 2015 221 447 A1 offenbart ein Verfahren zum Detektieren von Fehlzündungen während des Betriebs eines Kraftfahrzeugs. Mittels eines Drucksensor wird der Druck in einer Abgasleitung eines Verbrennungsmotors gemessen. Zwischen der Abgasleitung und dem Drucksensor ist eine Röhre angeordnet. Der zeitliche Verlauf des Signals, das von dem Drucksensor ausgegeben wird, wird erfasst. Dieser zeitliche Verlauf des Signals wird mit einem Schwellenwert verglichen und anhand dieses Vergleiches wird bestimmt, ob eine Fehlzündung stattgefunden hat. Der zeitliche Verlauf des Signals weist eine Mehrzahl von aufeinanderfolgenden Abschnitten auf, wobei jeder Abschnitt einem Zylinder zugeordnet ist. Der Schwellenwert wird basierend auf einem Referenzwert und einem betriebsabhängigen Wert bestimmt, wobei der betriebsabhängige Wert zum Beispiel von der momentanen Leistung des Verbrennungsmotors abhängig ist. Pro Abschnitt wird ein Minimum, ein Maximum oder ein Durchschnittswert des Signals mit einem zugehörigen und entsprechend bestimmten Schwellenwert verglichen und es wird eine Fehlzündung diagnostiziert, wenn das Minimum, das Maximum oder der Durchschnittswert des Signals unterhalb des zugehörigen Schwellenwertes liegt. Als Referenzwert wird beispielsweise der maximale Wert des Sensorsignals verwendet, das heißt im Prinzip der maximale Druck in der Abgasleitung im Laufe eines Umdrehunaszvklus des Motors.

Aufgabe der vorliegenden Erfindung ist es daher, ein Verfahren und ein Steuergerät zur Diagnostik von Verbrennungsaussetzern einer Verbrennungskraftmaschine zur Verfügung zu stellen, durch welches die Nachteile des Standes der Technik wenigstens teilweise überwunden werden. Das Verfahren soll insbesondere eine hohe Trennschärfe bei gleichzeitig geringem Rechenaufwand aufweisen.

Diese Aufgabe wird erfindungsgemäß gelöst durch ein Verfahren mit den Merkmalen des Patentanspruchs 1 und ein Steuergerät mit den Merkmalen des Patentanspruchs 8.

Gemäß einem ersten Aspekt betrifft die Erfindung ein Verfahren zur Diagnostik von Verbrennungsaussetzern einer Verbrennungskraftmaschine mit mindestens einem Zylinder.

Gemäß einem zweiten Aspekt betrifft die Erfindung ein Steuergerät zur Diagnostik von Verbrennungsaussetzern einer Verbrennungskraftmaschine, wobei das Steuergerät dazu ausgelegt ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der Erfindung.

Erfindungsgemäß ist vorgesehen, ein Verfahren zur Verfügung zu stellen, mit dem eine Diagnostik von Verbrennungsaussetzern der Verbrennungskraftmaschine derart vorgenommen werden kann, dass die folgenden Schritte ausgeführt werden: Bestimmen von Abgasgegendruckwerten des mindestens einen Zylinders über mindestens ein Arbeitsspiel, Korrelation der Abgasgegendruckwerte zur Nockenwellenposition und/oder dem Arbeitsspiel, Bestimmen der Abgasgegendruckmaxima und/oder Abgasgegendruckminima pro Arbeitsspiel, Vergleich der Abgasgegendruckmaxima und/oder Abgasgegendruckminima mit Maxima- und/oder Minimawerten von vorherigen Arbeitsspielen und Feststellen der Abweichungen, Vergleich der Abweichungen mit einem zuvor festgelegten Schwellenwert.

Unter dem Begriff der Verbrennungsaussetzer ist im Sinne der vorliegenden Erfindung insbesondere sowohl das Ausbleiben einer Entzündung des Gas-Treibstoffgemisches im Zylinder als auch eine unvollständige oder verschleppte Entzündung des Gemisches umfasst. Mithin ist nicht allein das Ausbleiben der Zündung oder des Zündfunkens gemeint, vor Allem da das Ausbleiben der Zündung oder des Zündfunkens nur eine von mehreren Ursachen für Verbrennungsaussetzer darstellen.

Die Verbrennungskraftmaschine kann ein Ottomotor oder ein Dieselmotor sein.

Im Rahmen des Ausstoßtakts wird Abgas aus dem jeweiligen Zylinder in den Abgaskrümmer ausgestoßen, indem wenigstens ein oder mehrere, dem jeweiligen Zylinder zugeordnete Auslassventile geöffnet werden. Somit resultiert der mittels des Drucksensors erfasste, in dem Abgaskrümmer herrschende Druck aus dem Ausstoßtakt beziehungsweise aus einem in dem jeweiligen Zylinder herrschenden Druck. Der Abgasgegendruck kann in der Abgasführung vorzugsweise benachbart zu dem Auslassventil von einem Abgasgegendrucksensor gemessen sein oder beispielsweise auf Grundlage mehrerer Messwerte, die während des Arbeitsspiels gemessen sind, berechnet sein.

Das Arbeitsspiel (auch als Arbeitszyklus bezeichnet) kann die Schritte Ansaugen, Verdichten, Arbeiten, Ausstoßen umfassen. Ein Arbeitsspiel der Verbrennungskraftmaschine erstreckt sich bei einem Viertaktmotor beispielsweise über zwei Kurbelwellenumdrehungen. Die Korrelation der Abgasgegendruckwerte zur Nockenwellenposition und/oder dem Arbeitsspiel kann durch die Mitteilung der Zeitspanne, der Arbeitsspiele und/oder der Nockenwellen- oder Kurbelwellenposition von den entsprechenden Erfassungsvorrichtungen an ein das Verfahren durchführendes Steuergerät erfolgen.

Im Ergebnis ergibt sich insbesondere eine Kurve des Abgasgegendrucks gegen den Kurbelwinkel.

Das Bestimmen der Abgasgegendruckmaxima und/oder Abgasgegendruckminima pro Zylinder kann durch eine Kurvendiskussion der Abgasgegendruckkurve mit Berechnung der Extremstellen erfolgen. Es wird insbesondere jeweils das Maximum und/oder das Minimum des Abgasgegendrucks direkt nach dem Öffnen des Auslassventils bestimmt.

Im Anschluss erfolgt erfindungsgemäß eine Zuordnung der so bestimmten Abgasgegendruckmaxima und/oder Abgasgegendruckminima zu dem individuellen Zylinder. Auch dies kann anhand der an das Steuergerät gesendeten Parameter für den jeweiligen Zylinder wie zum Beispiel des Kurbelwellenwinkels, des Zeitpunkts des Öffnens des Auslassventils, der Zündreihenfolge oder der Massenströme durchgeführt werden.

Hieran anschließend erfolgen ein Vergleich der so ermittelten Maxima- und/oder Minimawerte mit Maxima- und/oder Minimawerten von vorherigen Arbeitsspielen und ein Feststellen der Abweichungen. Das Feststellen der Abweichungen der Maxima- und/oder Minimawerte erfolgt durch einfache Differenzbildung.

Abschließend erfolgt erfindungsgemäß ein Vergleich der Abweichungen mit einem zuvor festgelegten Schwellenwert.

Die Ausnutzung des Zusammenhangs zwischen den Extremstellen aus dem Abgasgegendruckverlauf und der Verbrennungsaussetzer macht das beschriebene Verfahren robust gegen systematische und stochastische Fehler in einer Messwerterfassung eines Abgasgegendrucksensors. Die Betrachtung und der Vergleich nur der Abgasgegendruckextremstellen zu entsprechenden vorherigen Extremstellenwerten und nur der jeweiligen Differenzen mit einem voreingestellten Schwellenwert reduziert zudem Rechenaufwand und Speicherbedarf. Außerdem wird aufgrund des erfindungsgemäßen zunächst stattfindenden Vergleichs nur der Maxima- und/oder Minimawerte die Trennschärfe des Verfahrens gegenüber den vorbekannten Verfahren erheblich erhöht. Weiterhin ist das Verfahren nahezu unabhängig von den Umgebungsbedingungen und Fahrmanövern, und dies ohne einen hohen Fehlerkorrekturaufwand.

Mit anderen Worten ist ein Kerngedanke der vorliegenden Erfindung, gerade nicht Mittelwerte oder andere zunächst durch eine versuchte Fehlerkorrektur berechnete Druckwerte mit einem ebenfalls aus Mittelwerten berechneten, absoluten Schwellenwert für den Abgasgegendruck zu vergleichen sondern es ist vielmehr in Abgrenzung dazu Kerngedanke, die Extremstellen der Abgasgegendruckkurve gegen den Kurbelwinkel zu bestimmen, diese untereinander zu vergleichen und nur die Differenzwerte für jeden Zylinder gegen einen Schwellenwert zu prüfen.

Die hier vorgestellte Erfindung ermöglicht somit eine äußerst robuste und zuverlässige Erkennung von Verbrennungsaussetzern mit einer sehr hohen Trennschärfe. Aufgrund des Vergleichs der relativen Differenzwerte nur der Extremstellen kann auf sehr einfache Weise eine Erkennung erfolgen, die nicht abhängig ist von den betriebsbedingten Schwankungen der absoluten Abgasgegendruckwerte und daher auch keine aufwendige Fehlerkorrekturberechnung oder Anpassungsberechnung erfordert. Es ist sogar eine erfindungsgemäße Verbrennungsaussetzerdiagnose während des Fahrbetriebs, d.h. in der Dynamik, möglich, da minimal nur die letzten Verbrennungen der einzelnen Zylinder miteinander verglichen werden müssen und diese zeitlich sehr nah beieinander liegen.

In manchen Ausgestaltungen des Verfahrens kann das Verfahren folgende Schritte umfassen:
a) Messen des Abgasgegendrucks,
b) Korrelation der Messwerte mit der Zeit und/oder der Nockenwellenposition und/oder dem Arbeitsspiel,
c) Bestimmen der Maxima- und/oder Minimawerte der Korrelationskurve aus Schritt b),
d) Zuordnung der Maxima- und/oder Minimawerte zu mindestens einem, bevorzugt zu jedem, individuellem Zylinder,
e) Vergleich der Maxima- und/oder Minimawerte mit vorherigen Maxima- und/oder Minimawerte, und Berechnen der Differenzwerte, und
f) Vergleich der Differenzwerte mit einem vorher bestimmten Schwellenwert.

In einer alternativen Ausgestaltung kann der Schritt e) vor dem Schritt d) ausgeführt werden.

In einer Ausgestaltung des erfindungsgemäßen Verfahrens kann der Schwellenwert durch Messungen auf einem Prüfstand ermittelt werden.

Die Messungen sind einfach auszuführen und erfordern nur wenig Aufwand. Eine entsprechende Bedatung kann auch einmalig für einen jeweiligen Verbrennungsmotortypen erfolgen.

In manchen Ausführungsformen des erfindungsgemäßen Verfahrens kann der Schwellenwert in Abhängigkeit der Drehzahl und/oder der Last anpassbar sein.

Mit anderen Worten kann nicht nur jeweils ein fester Schwellenwert für die Differenz des Minimalwertes oder die Differenz des Maximalwertes hinterlegt werden, sondern in Abhängigkeit der Drehzahl und/oder der Motorlast können angepasste Schwellenwerte ermittelt und zum Vergleich abrufbar gespeichert sein.

In manchen Ausführungsbeispielen kann das erfindungsgemäße Verfahren weiterhin das Empfangen eines Sensorsignals mit einer hohen zeitlichen Abtastrate von einem hochauflösenden Abgasgegendrucksensor umfassen, wobei das Sensorsignal den Abgasgegendruck repräsentiert. Die Abtastrate kann im Bereich von 0,5 kHz bis 3000 kHz, insbesondere im Bereich von 1 kHz bis 1000 kHz, liegen. Nach Korrelation mit einem weiteren Parameter wie der Nockenwellenposition und/oder dem Arbeitsspiel kann aus dem Abgasgegendruck dann eine Kurve des zeitlichen Verhaltens des Abgasgegendrucks erhalten werden. Die Maximawerte und Minimawerte der Kurven für jeden Zylinder können damit sehr präzise ermittelt werden und die Unterschiede der Maximawerte und Minimawerte können präzise Aussagen über die Unterschiede der Zylinder bezüglich der Verbrennung liefern. Hieraus lassen sich mit hoher Trennschärfe Verbrennungsaussetzer diagnostizieren.

Die vorliegende Erfindung betrifft weiterhin ein Steuergerät zur Diagnostik von Verbrennungsaussetzern einer Verbrennungskraftmaschine mit mindestens zwei Zylindern. Das Steuergerät ist dazu ausgelegt, die Abgasgegendruckwerte der einzelnen Zylinder über mindestens zwei Arbeitsspiele zu empfangen, eine Korrelation der Abgasgegendruckwerte zur Nockenwellenposition und/oder dem Arbeitsspiel auszuführen, die Abgasgegendruckmaxima und/oder Abgasgegendruckminima pro Zylinder zu bestimmen, die Abgasgegendruckmaxima zu vergleichen und die Abweichungen zu vorherigen Arbeitsspielen festzustellen, und die festgestellten Abweichungen gegen einen zuvor bestimmten Schwellenwert zu prüfen.

Die Aufgabe des elektronischen Motorsteuergeräts besteht darin, alle Aktoren des Motor-Managementsystems so anzusteuern, dass sich ein bestmöglicher Motorbetrieb bezüglich Kraftstoffverbrauch, Abgasemissionen, Leistung und Fahrkomfort ergibt. Um dies zu erreichen, müssen viele Betriebsparameter mit Sensoren erfasst und mit Algorithmen - das sind nach einem festgelegten Schema ablaufende Rechenvorgänge - verarbeitet werden. Als Ergebnis ergeben sich Signalverläufe, mit denen die Aktoren angesteuert werden.

Das elektronische Motorsteuergerät erfasst über Sensoren und Sollwertgeber die für die Steuerung und Regelung des Motors erforderlichen Betriebsdaten.

Sollwertgeber (z. B. Schalter) erfassen vom Fahrer vorgenommene Einstellungen, wie z. B. die Stellung des Zündschlüssels im Zündschloss, die Schalterstellung der Klimasteuerung oder die Stellung des Bedienhebels für die Fahrgeschwindigkeitsregelung. Sensoren erfassen physikalische und chemische Größen und geben damit Aufschluss über den aktuellen Betriebszustand des Motors.

Beispiele für solche Sensoren sind:
- Drehzahlsensor für das Erkennen der Kurbelwellenstellung und die Berechnung der Motordrehzahl,
- Phasensensor zum Erkennen der Phasenlage (Arbeitsspiel des Motors) und der Nockenwellenposition bei Motoren mit Nockenwellen-Phasenstellern zur Verstellung der Nockenwellenposition,
- Motortemperatur- und Ansauglufttemperatursensor zum Berechnen von temperaturabhängigen Korrekturgrößen,
- Klopfsensor zum Erkennen von Motorklopfen,
- Luftmassenmesser und Saugrohrdrucksensor für die Füllungserfassung,
- Abgasdrucksensor zum Messen des Abgasgegendrucks, z:B. vor Turbine,
- Abgastemperatursensor,
- Luftmassenmesser,
- λ-Sonde für die λ-Regeiung.

Bei den Signalen der Sensoren kann es sich um digitale, pulsförmige oder analoge Spannungen handeln. Eingangsschaltungen im Steuergerät oder zukünftig auch vermehrt im Sensor bereiten alle diese Signale auf. Sie nehmen eine Anpassung des Spannungspegels vor und passen damit die Signale für die Weiterverarbeitung in einem Mikrocontroller des Steuergeräts an.

Zur Signalverarbeitung im Steuergerät gehören zum Beispiel die Berechnung der Einspritzung, die Füllungssteuerung, die Zünd- und Schließwinkelberechnung, die Füllungsberechnung, die Leerlaufdrehzahlregelung, die lambda-Regelung, die Klopfregelung, die Steuerung des Kraftstoffverdunstungs-Rückhaltesystems, die Ladedruckregelung, die Wegfahrsperre, die Fahrgeschwindigkeitsregelung, oder die Drehzahlbegrenzung.

Die Steuervorrichtung kann einen Prozessor, beispielsweise einen Mikroprozessor, aufweisen, der dazu ausgebildet ist, das beschriebene Verfahren zur Diagnostik von Verbrennungsaussetzern einer Verbrennungskraftmaschine auszuführen. Das Steuergerät kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem der vorgegebene Zusammenhang und/oder vorgegebene Parameter zum Durchführen des beschriebenen Verfahrens, beispielsweise das Zylindervolumen, hinterlegt sein.

Das Steuergerät kann in eine Motorsteuerung des Kraftfahrzeugs integriert sein. Alternativ kann die Steuervorrichtung als eine separate Einheit ausgebildet sein.

In manchen Ausführungsbeispielen kann die Steuervorrichtung einen Abgasgegendrucksensor umfassen oder mit einem Abgasgegendrucksensor, beispielsweise über einen der Signaleingänge, verbindbar sein. Der Abgasgegendrucksensor kann dabei dazu ausgebildet sein, ein Sensorsignal mit einer hohen zeitlichen Abtastrate, das den Abgasgegenruck repräsentiert, auszugeben.

Die vorliegende Erfindung betrifft weiterhin ein Kraftfahrzeug mit einer Verbrennungskraftmaschine und einer Steuervorrichtung zur Diagnostik von Verbrennungsaussetzern der Verbrennungskraftmaschine, wie sie voranstehend beschrieben wurde. Die Verbrennungskraftmaschine weist mindestens einen Zylinder, vorzugsweise mindestens zwei Zylinder, jeweils ein Einlassventil, über das der Zylinder mit einer Luftzuführung verbunden ist, und jeweils ein Auslassventil, über das die Zylinder mit einer Abgasführung verbunden sind, auf. Die Verbrennungskraftmaschine kann ein Ottomotor sein. Die Verbrennungskraftmaschine kann ein Dieselmotor sein, der vorzugsweise mit einer erweiterten Variabilität im Ventiltrieb betreibbar ist und/oder eine interne Abgasrückführung nutzt.

Es gibt eine Vielzahl von Möglichkeiten, das Verfahren auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnungen und den dazugehörigen Beschreibungen näher erläutert werden. In den Zeichnungen zeigt:
**Fig. 1** in einer stark schematisierten Darstellung ein Flussdiagramm eines erfindungsgemäßen Verfahrens zur Diagnostik von Verbrennungsaussetzern in einer beispielhaften Ausgestaltung der Erfindung,
**Fig. 2** ein Diagramm zum Veranschaulichen des Verfahrens, und
**Fig. 3** ein weiteres Diagramm zum Veranschaulichen des Verfahrens.

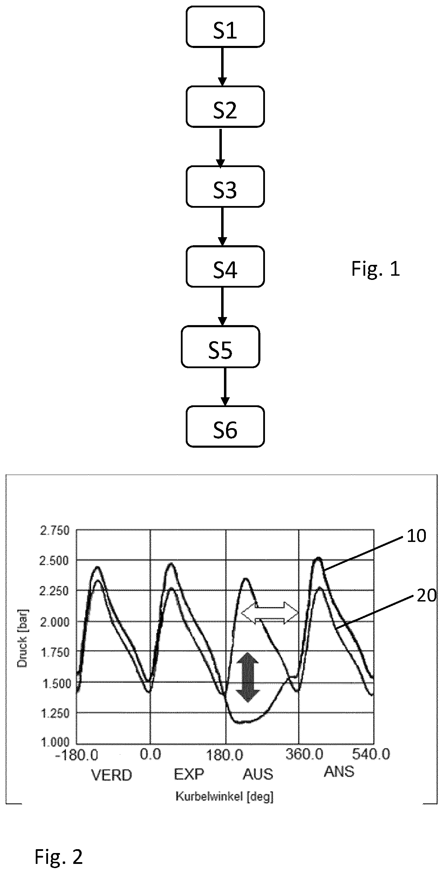

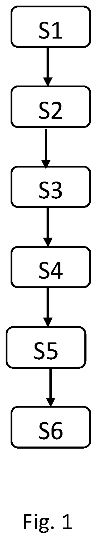

In Figur 1 ist ein Flussdiagramm eines Verfahrens zur Diagnostik von Verbrennungsaussetzern einer Verbrennungskraftmaschine in einer beispielhaften Ausgestaltung gezeigt.

Bei S1 wird von einem hochauflösenden Abgasgegendrucksensor ein Sensorsignal empfangen, das den Abgasgegendruck repräsentiert. Der Abgasgegendrucksensor ist dazu ausgebildet, den Abgasgegendruck mit einer hohen zeitlichen Abtastrate zu messen. Beispielsweise kann ein Wert alle 6 ° Kurbelwellenwinkel erfasst werden. Das Sensorsignal stellt somit für eine Vielzahl an Zeitpunkten eines, aber bevorzugt mehrerer, Arbeitszyklen der Verbrennungskraftmaschine Werte für den Abgasgegendruck zur Verfügung.

Bei S2 wird eine Korrelation der Messwerte des Abgasgegendrucksensors mit der Zeit und/oder der Nockenwellenposition und/oder dem Arbeitsspiel vorgenommen. Die so durchgeführte Signalaufbereitung ergibt eine Kurve des Abgasgegendrucks beispielsweise gegen die Werte des Kurbelwellenwinkels.

Bei S3 wird eine Kurvendiskussion mit Bestimmung der Extremstellen durchgeführt und es werden die jeweiligen Maxima- und/oder Minimawerte der Kurven aus S2 bestimmt. Bevorzugt werden hierfür die Maxima- und/oder Minimawerte jeweils direkt nach Öffnen des Auslassventils bestimmt.

Bei S4 wird eine Zuordnung der Maxima- und/oder Minimawerte zu den individuellen Zylindern vorgenommen. Dies kann beispielsweise anhand der Kurbelwellenwinkel oder in Korrelation mit den Nockenwellenpositionen erfolgen. Es kann sich eine Plausibilisierung der so gefundenen Zuordnung mit weiteren Betriebsparametern anschließen.

Bei S5 wird ein Vergleich der Maxima- und/oder Minimawerte des Abgasgegendrucks eines jeweiligen Zylinders zu den entsprechenden Maxima- und/oder Minimawerten zu Maxima- und/oder Minimawerten aus vorherigen Arbeitsspielen durchgeführt. Dies geschieht durch einfache Differenzbildung.

Bei S6 wird abschließend ein Vergleich der Differenzwerte der Abgasdruckmaxima und/oder Abgasdruckminima aus dem Schritt S5 mit einem zuvor bestimmten Schwellenwert vorgenommen. Ergibt der Vergleich, dass die ermittelte Differenz der Abgasdruckmaxima größer ist als der Schwellenwert, wird ein Verbrennungsaussetzer detektiert. Liegt die ermittelte Differenz der Extremwerte unter dem Schwellenwert, liegt kein Verbrennungsaussetzer vor. Optional kann eine Anpassung des Schwellenwertes zum Beispiel die Drehzahl und/oder die Last als Anpassungsgröße vorgenommen werden.

Figur 2 zeigt ein typisches Diagramm des Druckmesssignals 10, 20 in der Abgassammelleitung einer Verbrennungskraftmaschine über ein Arbeitsspiel, dargestellt als Abtrag gegen den Kurbelwinkel. Es wird in der Kurve 20 ein Abgasgegendruckverhalten ohne Verbrennungsaussetzer gezeigt. Demgegenüber zeigt Kurve 10 ein Abgasgegendruckverhalten mit einem Verbrennungsaussetzer. Die hier gezeigte Kurve wurde für eine Verbrennungskraftmaschine mit Turboaufladung im aufgeladenen Bereich bei einem Ladedruck von 1500 mbar und einer Drehzahl von 4500 gemäß Schritt S2 des erfindungsgemäßen Verfahrens wie in Figur 1 dargestellt ermittelt.

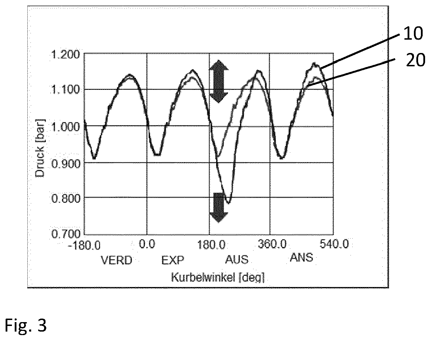

Figur 3 zeigt ein weiteres typisches Diagramm des Druckmesssignals 10, 20 in der Abgassammelleitung einer Verbrennungskraftmaschine über ein Arbeitsspiel, dargestellt als Abtrag gegen den Kurbelwinkel. Wie in Figur 2 wird in der Kurve 20 ein Abgasgegendruckverhalten ohne Verbrennungsaussetzer gezeigt. Demgegenüber zeigt Kurve 10 ein Abgasgegendruckverhalten mit einem Verbrennungsaussetzer. Die hier gezeigte Kurve wurde für eine Verbrennungskraftmaschine ohne Turboaufladung im Saugbereich bei einem Saugdruck von 300 mbar und einer Drehzahl von 4500 gemäß Schritt S2 des erfindungsgemäßen Verfahrens wie in Figur 1 dargestellt ermittelt.

### Bezugszeichenliste

- S1:: Messen des Abgasgegendrucks
- S2:: Korrelation der Messwerte mit der Zeit und/oder der Nockenwellenposition und/oder dem Arbeitsspiel
- S3:: Bestimmen der Maxima- und/oder Minimawerte der Korrelationskurve aus S2
- S4:: Zuordnung der Maxima- und/oder Minimawerte zu mindestens einem, bevorzugt zu jedem, individuellem Zylinder
- S5:: Vergleich der Maxima- und/oder Minimawerte zwischen den Zylindern und/oder zu vorherigen Werten und Feststellen der Abweichung
- S6:: Vergleich der Abweichungen aus S5 mit einem Schwellenwert
- 10:: Abgasgegendruckkurve mit Verbrennungsaussetzer
- 20:: Abgasgegendruckkurve ohne Verbrennungsaussetzer

## Patentansprüche

1. Verfahren zur Diagnostik von Verbrennungsaussetzern einer Verbrennungskraftmaschine mit mindestens einem Zylinder, umfassend folgende Schritte: Bestimmen von Abgasgegendruckwerten des mindestens einen Zylinders über mindestens ein Arbeitsspiel, Korrelation der Abgasgegendruckwerte zur Nockenwellenposition und/oder dem Arbeitsspiel, Bestimmen der Abgasgegendruckmaxima und/oder Abgasgegendruckminima pro Arbeitsspiel, Vergleich der Abgasgegendruckmaxima und/oder Abgasgegendruckminima mit Maxima- und/oder Minimawerten von vorherigen Arbeitsspielen und Feststellen der Abweichungen, wobei das Feststellen der Abweichungen durch einfache Differenzbildung erfolgt, Vergleich der Abweichungen mit einem zuvor festgelegten Schwellenwert, Detektion eines Verbrennungsaussetzers, wenn der Vergleich einer der Abweichungen mit dem zuvor festgelegten Schwellenwert ergibt, dass die ermittelte Abweichung größer ist als der Schwellenwert.

2. Verfahren gemäß Anspruch 1, **dadurch gekennzeichnet, dass** der Abgasgegendruck in der Abgasführung benachbart zu dem Auslassventil von einem Abgasgegendrucksensor gemessen wird.

3. Verfahren gemäß einem der beiden vorstehenden Ansprüche, **dadurch gekennzeichnet, dass** das Verfahren folgende Schritte umfasst:
a) Messen des Abgasgegendrucks,
b) Korrelation der Messwerte mit der Zeit und/oder der Nockenwellenposition und/oder dem Arbeitsspiel,
c) Bestimmen der Maxima- und/oder Minimawerte der Korrelationskurve aus Schritt b),
d) Zuordnung der Maxima- und/oder Minimawerte zu mindestens einem, bevorzugt zu jedem, individuellem Zylinder,
e) Vergleich der Maxima- und/oder Minimawerte mit vorherigen Maxima- und/oder Minimawerten, und Berechnen der Differenzwerte, und
f) Vergleich der Differenzwerte mit einem vorher bestimmten Schwellenwert.

4. Verfahren gemäß einem der vorstehenden Ansprüche, **dadurch gekennzeichnet, dass** der Schwellenwert durch Messungen auf einem Prüfstand ermittelt wird.

5. Verfahren gemäß einem der vorstehenden Ansprüche, **dadurch gekennzeichnet, dass** der Schwellenwert in Abhängigkeit der Drehzahl und/oder der Last anpassbar ist.

6. Verfahren gemäß Anspruch 3, **dadurch gekennzeichnet, dass** im Verfahren der Schritt e) vor dem Schritt d) ausgeführt wird.

7. Verfahren gemäß Anspruch 2, **dadurch gekennzeichnet, dass** Bestimmen von Abgasgegendruckwerten der einzelnen Zylinder mittels eines hochauflösenden Abgasgegendrucksensors erfolgt, wobei die Abtastrate des Abgasgegendrucksensors im Bereich von 0,5 kHz bis 3000 kHz, insbesondere im Bereich von 1 kHz bis 1000 kHz, liegt.

8. Steuergerät zur Diagnostik von Verbrennungsaussetzern einer Verbrennungskraftmaschine, wobei das Steuergerät dazu ausgebildet ist, ein Verfahren gemäß einem der vorstehenden Ansprüche auszuführen.

9. Steuergerät nach Anspruch 8, wobei das Steuergerät mindestens einen Abgasgegendrucksensor umfasst oder mit mindestens einem Abgasgegendrucksensor verbindbar ist, wobei der Abgasgegendrucksensor dazu ausgebildet ist, ein Sensorsignal mit einer hohen zeitlichen Abtastrate auszugeben, das den Abgasgegendruck für den jeweiligen Zylinder repräsentiert, wobei die Abtastrate des Abgasgegendrucksensors im Bereich von 0,5 kHz bis 3000 kHz, insbesondere im Bereich von 1 kHz bis 1000 kHz, liegt.

10. Kraftfahrzeug mit einer Verbrennungskraftmaschine mit mindestens zwei Zylindern, welche jeweils mindestens ein Einlassventil, über das die Zylinder mit einer Luftzuführung verbunden sind, und jeweils mindestens ein Auslassventil, über das jeder Zylinder mit einer Abgasführung verbunden ist, umfassen, und mit einem Steuergerät zur Erkennung von Verbrennungsaussetzern der Verbrennungskraftmaschine nach Anspruch 8 oder 9.

## Claims

1. Method for diagnosing combustion misfires of an internal combustion engine having at least one cylinder, comprising the following steps: determining exhaust gas counterpressure values of the at least one cylinder via at least one working cycle, correlating the exhaust gas counterpressure values with respect to the camshaft position and/or the working cycle, determining the exhaust gas counterpressure maxima and/or exhaust gas counterpressure minima per working cycle, comparing the exhaust gas counterpressure maxima and/or exhaust gas counterpressure minima with maximum and/or minimum values of previous working cycles and identifying the deviations, wherein the deviations are identified by means of simple subtraction, comparing the deviations with a previously defined threshold value, detecting a combustion misfire if the comparison of one of the deviations with the previously defined threshold value results in the determined deviation being greater than the threshold value.

2. Method according to claim 1, **characterized in that** the exhaust gas counterpressure is measured in the exhaust gas guide adjacent to the outlet valve by an exhaust gas counterpressure sensor.

3. Method according to either of the two preceding claims,
**characterized in that** the method comprises the following steps:
a) measuring the exhaust gas counterpressure,
b) correlating the measured values with the time and/or the camshaft position and/or the working cycle,
c) determining the maximum and/or minimum values of the correlation curve from step b),
d) assigning the maximum and/or minimum values to at least one, preferably to each, individual cylinder,
e) comparing the maximum and/or minimum values with previous maximum and/or minimum values, and calculating the difference values, and
f) comparing the difference values with a previously determined threshold value.

4. Method according to any of the preceding claims, **characterized in that** the threshold value is ascertained by measurements on a test bench.

5. Method according to any of the preceding claims, **characterized in that** the threshold value can be adapted on the basis of the rotational speed and/or the load.

6. Method according to claim 3, **characterized in that** in the method step e) is carried out before step d).

7. Method according to claim 2, **characterized in that** exhaust gas counterpressure values of the individual cylinders are determined by means of a high-resolution exhaust gas counterpressure sensor, the sampling rate of the exhaust gas counterpressure sensor being in the range of 0.5 kHz to 3000 kHz, in particular in the range of 1 kHz to 1000 kHz.

8. Control device for diagnosing combustion misfires of an internal combustion engine, wherein the control device is designed to carry out a method according to any of the preceding claims.

9. Control device according to claim 8, wherein the control device comprises at least one exhaust gas counterpressure sensor or can be connected to at least one exhaust gas counterpressure sensor, wherein the exhaust gas counterpressure sensor is designed to output a sensor signal at a high time sampling rate which represents the exhaust gas counterpressure for the relevant cylinder, wherein the sampling rate of the exhaust gas counterpressure sensor is in the range of 0.5 kHz to 3000 kHz, in particular in the range of 1 kHz to 1000 kHz.

10. Motor vehicle having an internal combustion engine comprising at least two cylinders, which in each case comprise at least one inlet valve via which the cylinders are connected to an air supply, and in each case at least one outlet valve via which each cylinder is connected to an exhaust gas guide, and having a control device for recognizing combustion misfires of the internal combustion engine according to either claim 8 or claim 9.

## Revendications

1. Procédé permettant le diagnostic de ratés de combustion d'un moteur à combustion interne comportant au moins un cylindre, comprenant les étapes suivantes : détermination de valeurs de contrepression des gaz d'échappement de l'au moins un cylindre sur au moins un cycle de travail, corrélation des valeurs de contrepression des gaz d'échappement avec la position de l'arbre à cames et/ou le cycle de travail, détermination du maximum de contrepression des gaz d'échappement et/ou du minimum de contrepression des gaz d'échappement par cycle de travail, comparaison du maximum de contrepression des gaz d'échappement et/ou du minimum de contrepression des gaz d'échappement avec des valeurs maximales et/ou minimales de cycles de travail précédents et identification des écarts, dans lequel l'identification des écarts est effectuée par simple soustraction, comparaison des écarts avec une valeur seuil préalablement identifiée, détection d'un raté de combustion lorsque la comparaison de l'un des écarts avec la valeur seuil préalablement identifiée indique que l'écart défini est supérieur à la valeur seuil.

2. Procédé selon la revendication 1, **caractérisé en ce que** la contrepression des gaz d'échappement dans la conduite de gaz d'échappement est mesurée à proximité de la soupape de sortie par un capteur de contrepression des gaz d'échappement.

3. Procédé selon l'une des deux revendications précédentes,
**caractérisé en ce que** le procédé comprend les étapes suivantes :
a) mesure de la contrepression des gaz d'échappement,
b) corrélation des valeurs mesurées avec le temps et/ou la position de l'arbre à cames et/ou le cycle de travail,
c) détermination des valeurs maximales et/ou minimales de la courbe de corrélation de l'étape b),
d) attribution des valeurs maximales et/ou minimales à au moins un cylindre individuel, de préférence à chaque cylindre individuel,
e) comparaison des valeurs maximales et/ou minimales avec des valeurs maximales et/ou minimales précédentes, et calcul des valeurs de différence, et
f) comparaison des valeurs de différence avec une valeur seuil préalablement déterminée.

4. Procédé selon l'une des revendications précédentes,
**caractérisé en ce que** la valeur seuil est définie par des mesures sur un banc d'essai.

5. Procédé selon l'une des revendications précédentes,
**caractérisé en ce que** la valeur seuil peut être adaptée en fonction de la vitesse de rotation et/ou de la charge.

6. Procédé selon la revendication 3, **caractérisé en ce que,** dans le procédé, l'étape e) est exécutée avant l'étape d).

7. Procédé selon la revendication 2, **caractérisé en ce que** la détermination de valeurs de contrepression des gaz d'échappement des cylindres individuels est effectuée au moyen d'un capteur de contrepression des gaz d'échappement à haute résolution, dans lequel le taux d'échantillonnage du capteur de contrepression des gaz d'échappement se trouve dans la plage allant de 0,5 kHz à 3 000 kHz, en particulier dans la plage allant de 1 kHz à 1 000 kHz.

8. Appareil de commande permettant le diagnostic de ratés de combustion d'un moteur à combustion interne, dans lequel l'appareil de commande est configuré pour exécuter un procédé selon l'une des revendications précédentes.

9. Appareil de commande selon la revendication 8, dans lequel l'appareil de commande comprend au moins un capteur de contrepression des gaz d'échappement ou peut être connecté à au moins un capteur de contrepression des gaz d'échappement, dans lequel le capteur de contrepression des gaz d'échappement est configuré pour émettre un signal de capteur à un taux d'échantillonnage temporel élevé, lequel signal de capteur représente la contrepression des gaz d'échappement pour le cylindre respectif, dans lequel le taux d'échantillonnage du capteur de contrepression des gaz d'échappement se trouve dans la plage allant de 0,5 kHz à 3 000 kHz, en particulier dans la plage allant de 1 kHz à 1 000 kHz.

10. Véhicule automobile comportant un moteur à combustion interne comportant au moins deux cylindres, lesquels comprennent respectivement au moins une soupape d'entrée, par l'intermédiaire de laquelle les cylindres sont reliés à une conduite d'amenée d'air, et respectivement au moins une soupape de sortie, par l'intermédiaire de laquelle chaque cylindre est relié à une conduite de gaz d'échappement, et comportant un appareil de commande permettant de détecter des ratés de combustion du moteur à combustion interne selon la revendication 8 ou 9.
